# EUROPÄISCHE PATENTSCHRIFT

(11) **EP 2 062 312 B1**
(45) Veröffentlichungstag und Bekanntmachung des Hinweises auf die Patenterteilung: **21.11.2018**
(21) Anmeldenummer: 07725991.9
(22) Anmeldetag: 13.06.2007
(51) Int. Cl.: H01M 8/0202, H01M 8/0276, H01M 8/0286, H01M 8/0297, H01M 8/0271, H01M 8/1018, H01M 8/0267

(54) **MODUL FÜR EINE BRENNSTOFFZELLENANORDNUNG**
MODULE FOR A FUEL CELL ARRANGEMENT
MODULE POUR DISPOSITIF DE PILE À COMBUSTIBLE

(30) Priorität: 12.07.2006 DE 102006032530
(43) Veröffentlichungstag der Anmeldung: 27.05.2009
(73) Patentinhaber: Carl Freudenberg KG, 69469 Weinheim (DE)
(72) Erfinder: GEISS, Stefan, 69514 Laudenbach (DE)
(86) Internationale Anmeldenummer: PCT/EP2007/005208
(87) Internationale Veröffentlichungsnummer: WO 2008/006435

(56) Entgegenhaltungen:
- EP-A- 1 403 951
- EP-A- 1 653 538
- JP-A- 2001 338 673
- US-A1- 2004 216 832

## Beschreibung

### Technisches Gebiet

Die Erfindung betrifft ein Modul für eine Brennstoffzellenanordnung, umfassend stapelförmig angeordnete Platten, wobei zumindest zwei Platten mittels eines Dichtelementes teilweise miteinander verbunden sind.

### Stand der Technik

Bei derartigen Modulen, die aus der DE 102 50 434 A1 bekannt sind, ist vorteilhaft, dass die Anzahl der für den Zusammenbau einer Brennstoffzellenanordnung benötigten Einzelteile reduziert wird und dass der Zusammenbau mit einer geringeren Anzahl von Arbeitsschritten möglich ist. Des Weiteren sind keine zusätzlichen Maßnahmen zur Fixierung der Platten notwendig, da die Fixierung durch das Dichtelement erfolgt, welches kraft- und/oder formschlüssig mit den Platten verbunden ist. Die Platten sind dabei meist als Bipolarplatten ausgebildet und zum Einsatz in PEM-Brennstoffzellen gedacht. Das Dichtelement wird dabei häufig während eines Spritzgießprozesses auf die Platten aufgebracht. Dabei ist nachteilig, dass durch Schrumpfvorgänge in dem Dichtelement lokale Leckagen zwischen den Platten auftreten können, wodurch Kühlflüssigkeit oder Brennstoffzellengase überströmen können oder dass Dichtmaterial in den Zwischenraum zwischen den Platten gepresst wird, woraus ein erhöhter elektrischer Widerstand aufgrund einer Spaltwirkung resultiert. Die Qualitätssicherung und Prüfung derartiger Dichtungsanordnungen ist schwierig, da die Dichtstelle nicht zerstörungsfrei einsehbar ist.

### Darstellung der Erfindung

Der Erfindung liegt die Aufgabe zugrunde, ein Modul für eine Brennstoffzellenanordnung bereitzustellen, bei dem Leckagen zwischen den Platten zuverlässig vermieden werden können.

Diese Aufgabe wird mit den Merkmalen von Anspruch 1 gelöst. Auf vorteilhaften Ausgestaltungen nehmen die Unteransprüche Bezug.

Zur Lösung der Aufgabe ist zwischen den Platten zumindest eine weitere Dichtung angeordnet. Erfindungsgemäß wird die Dichtung vor einer unlösbaren Verbindung der beiden Platten auf zumindest einer der Platten angeordnet. Durch Auslegung von Dichtmaterial und Dichtungsgeomtrie ergibt sich nach Zusammenfügen der Platten eine definierte Verpressung der Dichtung, wodurch die Dichtwirkung sicher gestellt ist und Leckagen zwischen den Platten unterbunden werden. Bei der erfindungsgemäßen Lösung ist es nicht erforderlich, das Dichtungsmaterial für das Dichtelement mit besonders hohem Druck in die Dichtstelle zu pressen, da die Dichtheit bereits durch das weitere Dichtelement gewährleistet ist. Dadurch kann ein Überlaufen des Dichtmaterials zwischen die Platten vermieden werden und die elektrische Leitfähigkeit des Moduls wird nicht beeinträchtigt.

Auf den einander zugewandten Seiten der Platten können Ausnehmungen angeordnet sein, in denen die weitere Dichtung angeordnet ist. Die Ausnehmungen können als Dichtnut ausgebildet sein, die in einer oder in beiden Platten auf den einander zugewandten Seite angeordnet sind. In diesen Ausnehmungen wird die weitere Dichtung angeordnet.

Die Platten sind als Bipolarplatten mit integrierten Kühleinrichtungen ausgebildet. Ein Element einer Brennstoffzelle, insbesondere einer PEM-Brennstoffzelle, umfasst eine Ionenaustauscher Membran die zwischen zwei Bipolarplatten angeordnet ist. Dabei werden jeweils zwei Bipolarplatten von zwei benachbarten Zellen (Elementen) zu einem Modul zusammengefasst. Die Bipolarplatten weisen in Richtung der Membran eine Gasverteilerstruktur, durch die die Reaktionsgase auf die Membran geführt werden. In Richtung der anderen Bipolarplatten sind Ausnehmungen vorgesehen die dazu geeignet sind, Kühlflüssigkeit zwischen den Bipolarplatten hindurch zu leiten und so die Betriebstemperatur der Brennstoffzelle zu regeln. Die weitere Dichtung ist auf der Seite der Bipolarplatten angeordnet auf der sich die Ausnehmungen für die Kühleinrichtung befindet. Des Weiteren befinden sich in den Bipolarplatten Durchbrechungen, durch die die Reaktionsgase und Kühlmedien durch die Bipolarplatten geleitet werden. Die weitere Dichtung verhindert ein Überströmen der Reaktionsgase sowie Leckagen der Kühlflüssigkeit.

Die weitere Dichtung kann als Spritzgießteil ausgebildet sein. Dazu wird das Dichtungsmaterial mittels Spritzgießen in die Ausnehmungen eingebracht, gleichzeitig kann die Dichtung mit einer Oberflächenprofilierung versehen werden. Derartige Dichtungen bestehen vorteilhafterweise aus einem elastomeren Werkstoff, beispielsweise aus EPDM oder FKM. Diese Dichtungen sind einfach und kostengünstig herstellbar.

Die weitere Dichtung kann als Klebeverbund ausgebildet sein. Dabei kann es sich um eine Kleberaupe aus einem geeigneten Klebemittel oder einen Klebeverbund aus einem Epoxydharz handeln. Dabei kann durch Einlegen des Klebeverbunds und anschließendes Verpressen ein fester Verbund der beiden Platten hergestellt werden. Die Klebeverbindung kann durch eine anschließende Wärmebehandlung optimiert werden. Wenn keine erhöhten Anforderungen an die Verbindung bestehen, ist es nicht erforderlich, die Platten mittels des Dichtelements zusätzlich miteinander zu verbinden.

Die weitere Dichtung kann als Flachdichtung ausgebildet sein. Flachdichtungen sind bei der statischen Verbindung ebener Bauteile seit langem bekannt. Die Flachdichtungen können stoffschlüssig oder kraft-/formschlüssig mit einer Platte verbunden sein.

Die weitere Dichtung kann eine Oberflächenprofilierung aufweisen. Oberflächenprofilierungen sind beispielsweise Wulste, Wellen, kammartige Erhebungen oder konvex/konkave Oberflächengeometrien. Die Profilierungen führen zu erhöhten Kontaktspannungen bei geringen Verspannkräften an der Dichtstelle und damit zu einer verbesserten Dichtwirkung.

Die weitere Dichtung kann aus einem O-Ring bestehen. O-Ringe sind ebenfalls seit langem bekannte Dichtelemente zur statischen Abdichtung. O-Ringe werden in einer auf den O-Ring abgestimmten Nut eingelegt und verpresst.

In einer anderen Ausführung kann eine Platte zumindest einen Vorsprung aufweisen, der benachbart zu dem Dichtelement angeordnet ist und die weitere Dichtung bildet. Der Vorsprung legt sich beim Zusammenfügen der Platten an die andere Platte an und verursacht eine lokal vergrößerte Flächenpressung im Bereich des Vorsprungs. Durch die erhöhte Flächenpressung ergibt sich in diesem Bereich eine verbesserte Dichtheit, wodurch ein Überlaufen des Dichtmaterials für das Dichtelement beim Spritzgießen verhindert werden kann. Das ist besonders vorteilhaft, da die Platten nach dem Fertigen des Dichtelements fest miteinander verbunden sind und die Dichtstelle nicht nachbearbeitet werden kann. Diese als Vorsprung ausgebildete weitere Dichtung kann mit einer der oben beschriebenen weiteren Dichtung kombiniert sein.

Eine Platte kann zwei umlaufende Vorsprünge aufweisen, die jeweils benachbart zu dem Dichtelement angeordnet sind und die weitere Dichtung bilden. Dadurch wird ein Überlaufen des Dichtmaterials in beide Richtungen verhindert.

Die Vorsprünge können materialeinheitlich und einstückig mit der Platte ausgebildet sein. Die Vorsprünge können beim Formgeben der Platte vorgesehen werden. Die vorteilhafte Dichtwirkung ergibt sich sowohl bei metallischen als auch bei graphitischen Platten.

Der Vorsprung kann dreieckförmig ausgebildet sein. Dreieckige Vorsprünge sind besonders einfach herstellbar und entformbar. Des Weiteren sind sie besonders stabil und bewirken eine besonders hohe Flächenpressung.

Die andere Platte kann zumindest eine zu dem Vorsprung kongruente Ausnehmung aufweisen. Hierbei ist vorteilhaft, dass die Platten sehr genau zueinander angeordnet werden können, wodurch ein aufwendiges Ausrichten der Platten vor dem Spritzgießen entfällt. Die Herstellung der Platten ist dadurch einfacher und kostengünstiger. Es ist auch immer gewährleistet, dass durch beide Platten weisende Bohrungen oder Anschlusselemente mit großer Genauigkeit ausgerichtet sind. Es ergibt sich ein Formschluss der beiden Platten, so dass sie nach dem Fügen auch nicht mehr gegeneinander verschoben werden können.

Bei dem erfindungsgemäßen Verfahren zur Herstellung eines Moduls für eine Brennstoffzelle werden zunächst die Platten hergestellt, danach wird auf den Platten die weitere Dichtung angeordnet und danach werden zwei Platten zusammengefügt und danach wird das Dichtungselement derart mit den Platten verbunden, dass beide Platten miteinander verbunden sind.

### Kurzbeschreibung der Zeichnung

Einige Ausführungsbeispiele des erfindungsgemäßen Moduls werden nachfolgend anhand der Figuren näher erläutert. Diese zeigen, jeweils schematisch:
- Fig. 1: ein erfindungsgemäßes Modul im Querschnitt;
- Fig. 2: ein Modul mit einem außenumfangsseitig angeordneten Dichtelement;
- Fig. 3: ein Modul mit einer querschnittsgleichen Durchbrechung;
- Fig. 4: ein Modul mit Mediendurchtritt und mehreren weiteren Dichtungen;
- Fig. 5: ein Modul dessen Dichtelement eine Auskleidung für den Mediendurchtritt bildet;
- Fig. 6: ein Modul mit Mediendurchtritt und mehreren Dichtelementen;
- Fig. 7: ein Modul mit zwei benachbart zu dem Dichtelement angeordneten Vorsprüngen;
- Fig. 8: ein Modul mit zwei benachbart zu dem Dichtelement angeordneten Vorsprüngen die in Rechtecknuten angeordnet sind.

### Ausführung der Erfindung

Die Figuren zeigen jeweils ein Modul 1 für eine Brennstoffzellenanordnung, in diesen Ausführungen eine PEM-Brennstoffzelle. Das Modul 1 besteht aus zwei stapelförmig angeordnete Platten 2, 3 die mittels eines Dichtelementes 4 teilweise miteinander verbunden sind. Dazu weisen die Platten 2, 3 langlochartigen Durchbrechungen 9 auf, die derart zueinander versetzt angeordnet sind, dass sich Öffnungen 10 bilden. Die Platten 2, 3 sind graphitische Bipolarplatten, welche auf den einander zugewandten Seiten eine Kühleinrichtung 7 aufweisen. Die Kühleinrichtung 7 besteht aus kühlschlangenartigen Ausnehmungen. Zwischen den Platten 2, 3 ist jeweils zumindest eine weitere Dichtung 5 angeordnet. Dazu sind auf den einander zugewandten Seiten der Platten 2, 3 Ausnehmungen 6 angeordnet, in denen die weitere Dichtung 5 angeordnet ist. Die nachstehend gezeigten Module 1 stellen jeweils eine Ausführung dar, es sind jedoch weitere Ausführungen denkbar, bei denen die Dichtelemente 4 und die weiteren Dichtungen 5 der verschiedenen Ausführungen miteinander kombiniert sind.

Zur Herstellung eines Moduls 1 werden zunächst die Platten 2, 3 hergestellt. Danach werden falls erforderlich zunächst die Ausnehmungen 6 in die Platten 2, 3 eingebracht in die die weitere Dichtung 5 angeordnet wird. Anschließend werden die zwei Platten 2, 3 zusammengefügt und das Dichtungselement 4 wird derart mit den Platten 2, 3 verbunden, dass das Dichtelement 4 beide Platten 2, 3 formschlüssig miteinander verbindet. Auf den jeweils voneinander abgewandten Seiten der Platten 2, 3 ist jeweils ein Strömungsfeld 13, 14 angeordnet. Die Strömungsfelder 13, 14 bilden eine Anode 13 und eine Kathode 14 zweier benachbarter Brennstoffzellen. Durch die Strömungsfelder 13, 14 erfolgt die Verteilung der Reaktionsgase in Richtung der Membran (nicht dargestellt), die zwischen Anode 13 und Kathode 14 angeordnet ist.

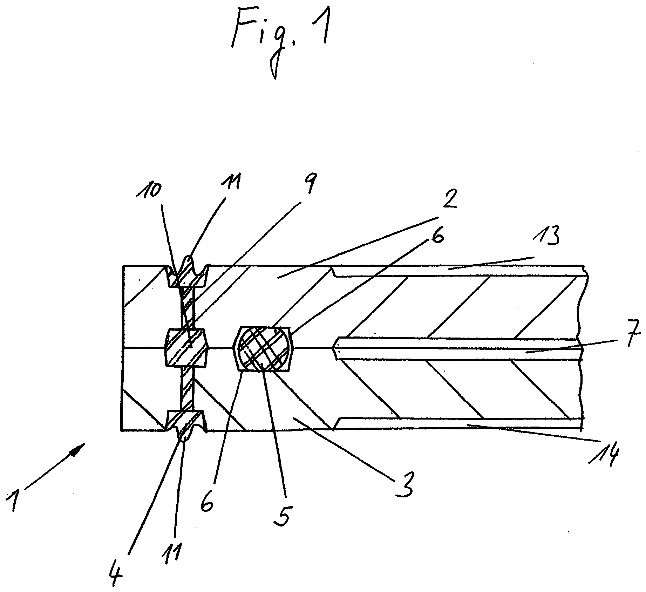

Figur 1 zeigt ein Modul 1 bei dem die weitere Dichtung 5 als O-Ring ausgebildet ist, wobei die weitere Dichtung 5 in Ausnehmungen 6 der Platten 2, 3 angeordnet ist. Das Dichtelement 4 besteht aus EPDM oder in anderen Ausführungen auch aus FKM und ist mittels Spritzgießen in den Durchbrechungen 9 angeordnet. Die Durchbrechungen 9 weisen innerhalb der Platten 2, 3 einen kleineren Querschnitt auf. Das Dichtelement 4 weist wulstförmige Erhebungen 11 auf.

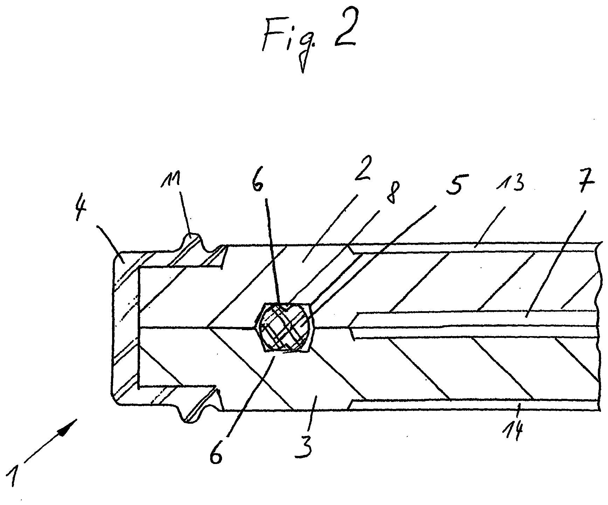

Bei dem Modul 1 gemäß Figur 2 ist das Dichtelement 4 außenumfangsseitig an den Platten 2, 3 angeordnet und verbindet dadurch die Platten 2, 3 formschlüssig. In dieser Ausführung ist die weitere Dichtung 5 als Spritzgießteil ausgebildet, wobei die weitere Dichtung 5 eine Oberflächenprofilierung 8 aufweist.

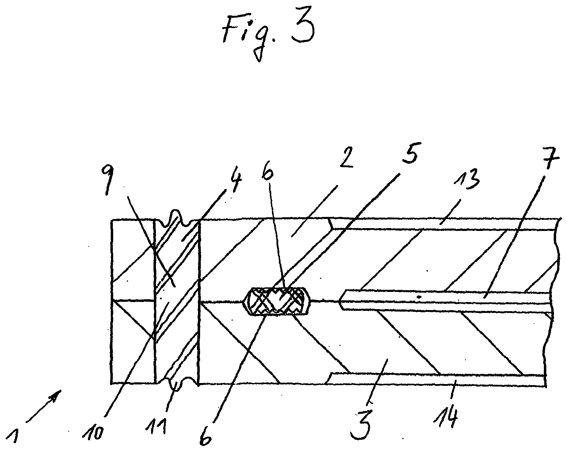

Figur 3 zeigt ein Modul 1 gemäß Figur 1, wobei in dieser Ausgestaltung die Durchbrechungen 9 einen gleich bleibenden Querschnitt aufweisen. In dieser Ausführung ist die weitere Dichtung 5 als Flachdichtung ausgebildet.

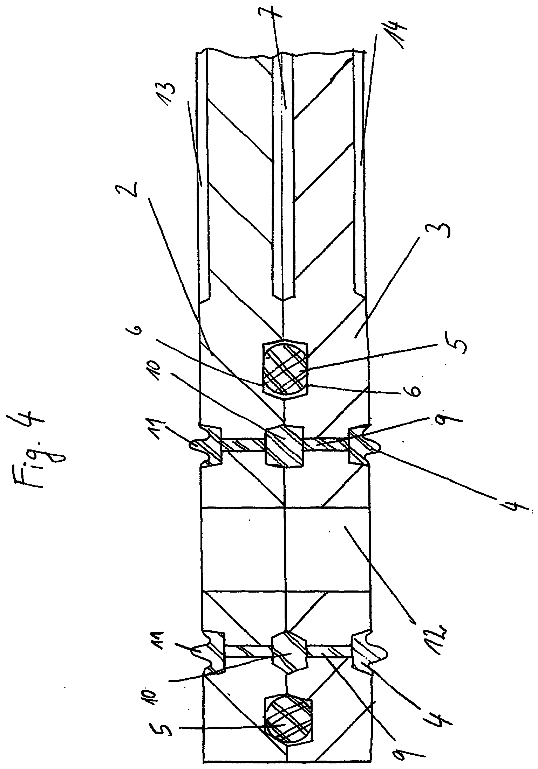

Figur 4 zeigt Platten mit einem Mediendurchtritt 12 durch die die Reaktionsgase geleitet werden. Der Mediendurchtritt 12 ist jeweils durch ein Dichtelement 4 und einer weiteren Dichtung 5 gegenüber der Kühleinrichtung 7 abgedichtet.

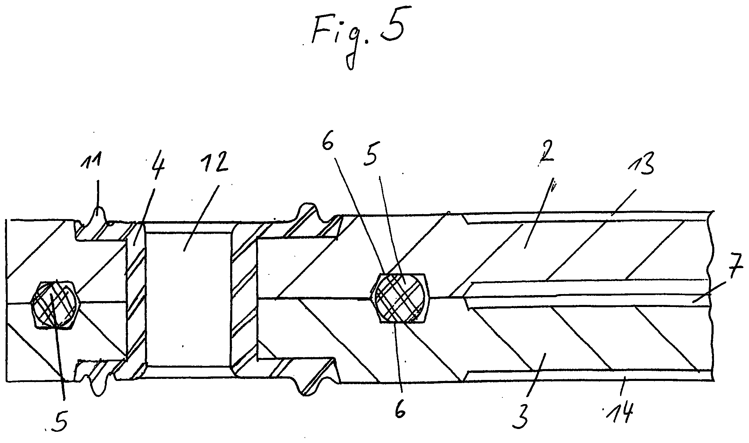

Figur 5 zeigt ein Modul 1 gemäß Figur 4, wobei das Dichtelement 4 eine Auskleidung des Mediendurchtritts 12 bildet. In dieser Ausführung ist die weitere Dichtung 5 als Klebeverbund ausgebildet.

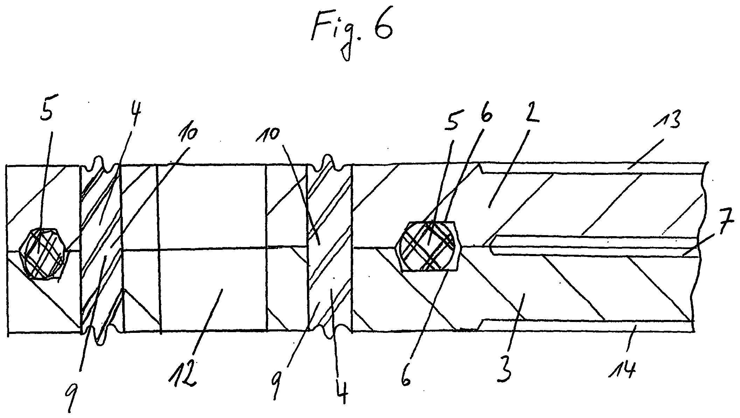

Figur 6 zeigt ein Modul 1 gemäß Figur 4, wobei in dieser Ausgestaltung die Durchbrechungen 9 einen gleich bleibenden Querschnitt aufweisen.

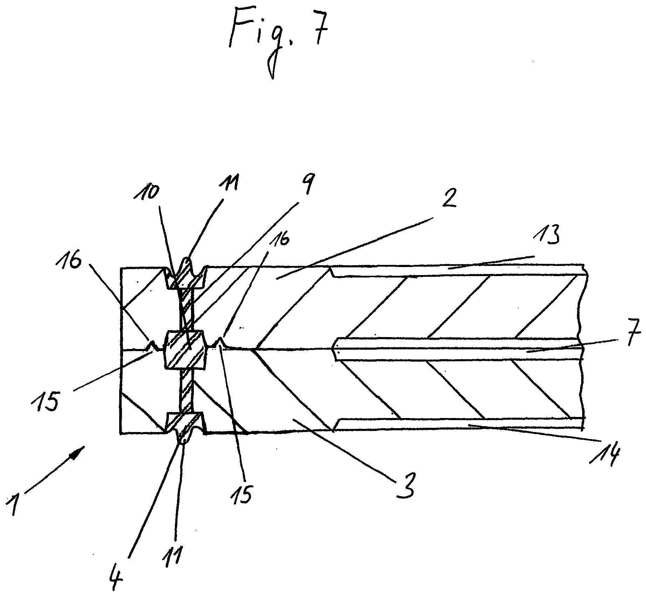

Figur 7 zeigt ein Modul 1 für eine Brennstoffzellenanordnung, in diesen Ausführungen eine PEM-Brennstoffzelle. Das Modul 1 besteht aus zwei stapelförmig angeordnete Platten 2, 3 die mittels eines Dichtelementes 4 teilweise miteinander verbunden sind. Dazu weisen die Platten 2, 3 langlochartige Durchbrechungen 9 auf, die derart zueinander versetzt angeordnet sind, dass sich Öffnungen 10 bilden. Die Platten 2, 3 sind graphitische Bipolarplatten, welche auf den einander zugewandten Seiten eine Kühleinrichtung 7 aufweisen. Die Kühleinrichtung 7 besteht aus kühlschlangenartigen Ausnehmungen. Zwischen den Platten 2, 3 ist jeweils zumindest eine weitere Dichtung 5 angeordnet. Diese weitere Dichtung 5 besteht in dieser Ausführung aus beidseitig des Dichtelementes 4 angeordneten Vorsprüngen 15 die materialeinheitlich und einstückig mit der Platte 3 ausgebildet sind und demnach aus Graphit bestehen. Der Vorsprung 15 ist umlaufend, wallartig ausgebildet. In der Platte 2 befindet sich beidseitig des Dichtelementes 4 jeweils eine ebenfalls umlaufende Ausnehmung 16, die kongruent zu den Vorsprüngen 15 ausgebildet ist.

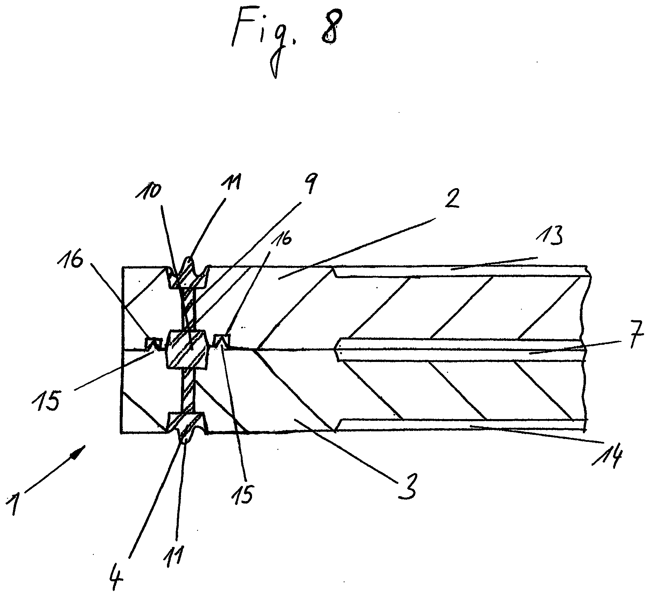

Figur 8 zeigt ein Modul 1 gemäß Figur 7. In dieser Ausführung ist die Ausnehmung 16, in der der Vorsprung 15 angeordnet ist, als rechteckförmige Nut ausgebildet. Hierbei ist vorteilhaft, dass das Material des Vorsprungs 15, der hier v-förmig ausgebildet ist, beim Verpressen der beiden Platten 2, 3 in den verbleibenden Freiraum innerhalb der Ausnehmung 16 verdrängt werden kann. Dadurch kann der Vorsprung 15 höher ausgebildet sein als die Ausnehmung 16 tief ist und es ergibt sich ein besonders dichter Verbund. Der Vorsprung 15 kann auch andere Formgebungen aufweisen, so kann der Vorsprung 15 beispielsweise auch halbkreisförmig oder parabelförmig ausgebildet sein.

## Patentansprüche

1. Verfahren zur Herstellung eines Moduls (1), für eine Brennstoffzellenanordnung, umfassend stapelförmig angeordnete Platten (2, 3), wobei zumindest zwei Platten (2, 3) mittels eines Dichtelementes (4) teilweise miteinander verbunden sind, wobei zwischen den Platten (2, 3) zumindest eine weitere Dichtung (5) angeordnet ist und wobei die Platten (2, 3) als Bipolarplatten mit integrierten Kühleinrichtungen (7) ausgebildet sind, wobei die weitere Dichtung (5) auf der Seite der Platten (2,3) angeordnet ist, auf der sich die Ausnehmungen für die Kühleinrichtungen (7) befinden, **dadurch gekennzeichnet, dass** zunächst die Platten (2, 3) hergestellt werden und auf den Platten (2, 3) die weitere Dichtung (5) angeordnet wird und danach zwei Platten (2, 3) zusammengefügt werden und danach das Dichtelement (4) derart mit den Platten (2, 3) verbunden wird, dass beide Platten (2, 3) miteinander verbunden sind.

2. Modul (1) für eine Brennstoffzellenanordnung, hergestellt mit einem Verfahren nach Anspruch 1, umfassend stapelförmig angeordnete Platten (2, 3), wobei zumindest zwei Platten (2, 3) mittels eines Dichtelementes (4) teilweise miteinander verbunden sind, wobei zwischen den Platten (2, 3) zumindest eine weitere Dichtung (5) angeordnet ist und wobei die Platten (2, 3) als Bipolarplatten mit integrierten Kühleinrichtungen (7) ausgebildet sind, **dadurch gekennzeichnet, dass** die weitere Dichtung (5) auf der Seite der Platten (2,3) angeordnet ist, auf der sich die Ausnehmungen für die Kühleinrichtungen (7) befinden.

3. Modul nach Anspruch 2, **dadurch gekennzeichnet, dass** auf den einander zugewandten Seiten der Platten (2, 3) Ausnehmungen (6) angeordnet sind, in denen die weitere Dichtung (5) angeordnet ist.

4. Modul nach einem der Ansprüche 2 bis 3, **dadurch gekennzeichnet, dass** die weitere Dichtung (5) als Spritzgießteil ausgebildet ist.

5. Modul nach einem der Ansprüche 2 bis 3, **dadurch gekennzeichnet, dass** die weitere Dichtung (5) als Klebeverbund ausgebildet ist.

6. Modul nach einem der Ansprüche 2 bis 4, **dadurch gekennzeichnet, dass** die weitere Dichtung (5) als Flachdichtung ausgebildet ist.

7. Modul nach einem der Ansprüche 2 bis 5, **dadurch gekennzeichnet, dass** die weitere Dichtung (5) eine Oberflächenprofilierung (8) aufweist.

8. Modul nach einem der Ansprüche 2 oder 3, **dadurch gekennzeichnet, dass** die weitere Dichtung (5) aus einem O-Ring besteht.

9. Modul nach Anspruch 2, **dadurch gekennzeichnet, dass** eine Platte (3) zumindest einen Vorsprung (15) aufweist, der benachbart zu dem Dichtelement (4) angeordnet ist und die weitere Dichtung (5) bildet.

10. Modul nach Anspruch 2, **dadurch gekennzeichnet, dass** eine Platte (3) zwei umlaufende Vorsprünge (15) aufweist, die jeweils benachbart zu dem Dichtelement (4) angeordnet sind und die weitere Dichtung (5) bilden.

11. Modul nach Anspruch 9 oder 10, **dadurch gekennzeichnet, dass** die Vorsprünge (15) materialeinheitlich und einstückig mit der Platte (3) ausgebildet sind.

12. Modul nach einem der Ansprüche 9 bis 11, **dadurch gekennzeichnet, dass** der Vorsprung (15) dreieckförmig ausgebildet ist.

13. Modul nach einem der Ansprüche 9 bis 12, **dadurch gekennzeichnet, dass** die andere Platte (2) zumindest eine zu dem Vorsprung (15) kongruente Ausnehmung (16) aufweist.

## Claims

1. Method of producing a module (1) for a fuel-cell arrangement, comprising plates (2, 3) arranged in the form of a stack, wherein at least two plates (2, 3) are connected to one another to some extent by means of a sealing element (4), wherein at least one further seal (5) is arranged between the plates (2, 3), and wherein the plates (2, 3) are designed in the form of bipolar plates with integrated cooling devices (7), the further seal (5) being arranged on that side of the plates (2, 3) on which the recesses for the cooling devices (7) are located, **characterized in that**, in the first instance, the plates (2, 3) are produced and the further seal (5) is arranged on the plates (2, 3) and, thereafter, two plates (2, 3) are joined together and then the sealing element (4) is connected to the plates (2, 3) such that the two plates (2, 3) are connected to one another.

2. Module (1) for a fuel-cell arrangement, produced by a method according to Claim 1, comprising plates (2, 3) arranged in the form of a stack, wherein at least two plates (2, 3) are connected to one another to some extent by means of a sealing element (4), wherein at least one further seal (5) is arranged between the plates (2, 3), and wherein the plates (2, 3) are designed in the form of bipolar plates with integrated cooling devices (7), **characterized in that** the further seal (5) is arranged on that side of the plates (2, 3) on which the recesses for the cooling devices (7) are located.

3. Module according to Claim 2, **characterized in that** recesses (6) are arranged on the mutually facing sides of the plates (2, 3) and have the further seal (5) arranged in them.

4. Module according to either of Claims 2 and 3, **characterized in that** the further seal (5) is designed in the form of an injection moulding.

5. Module according to either of Claims 2 and 3, **characterized in that** the further seal (5) is designed in the form of an adhesive-bonding means.

6. Module according to one of Claims 2 to 4, **characterized in that** the further seal (5) is designed in the form of a flat seal.

7. Module according to one of Claims 2 to 5, **characterized in that** the further seal (5) has a surface profiling (8).

8. Module according to either of Claims 2 and 3, **characterized in that** the further seal (5) consists of an O-ring.

9. Module according to Claim 2, **characterized in that** one plate (3) has at least one protrusion (15), which is adjacent to the sealing element (4) and forms the further seal (5).

10. Module according to Claim 2, **characterized in that** one plate (3) has two encircling protrusions (15), which are each adjacent to the sealing element (4) and form the further seal (5).

11. Module according to Claim 9 or 10, **characterized in that** the protrusions (15) are formed from the same material as, and in one piece with, the plate (3) .

12. Module according to one of Claims 9 to 11, **characterized in that** the protrusion (15) is of triangular design.

13. Module according to one of Claims 9 to 12, **characterized in that** the other plate (2) has at least one recess (16) which is congruent to the protrusion (15).

## Revendications

1. Procédé de production d'un module (1) pour dispositif de pile à combustible, comprenant des plaques (2, 3) disposées en empilement, dans lequel au moins deux plaques (2, 3) sont partiellement reliées l'une à l'autre au moyen d'un élément d'étanchéité (4), dans lequel au moins un autre joint (5) est disposé entre les plaques (2, 3), et dans lequel les plaques (2, 3) sont réalisées sous forme de plaques bipolaires comportant des dispositifs de refroidissement (7) intégrés, dans lequel l'autre joint (5) est disposé sur le côté des plaques (2, 3) sur lequel sont disposés les logements destinés aux dispositifs de refroidissement (7), **caractérisé en ce que** les plaques (2, 3) sont produites en premier lieu et **en ce que** l'autre joint (5) est disposé sur les plaques (2, 3) et **en ce que** deux plaques (2, 3) sont ensuite assemblées, puis **en ce que** l'élément d'étanchéité (4) est relié aux plaques (2, 3) de manière à ce que les deux plaques (2, 3) soient reliées l'une à l'autre.

2. Module (1) pour dispositif de pile à combustible produit par un procédé selon la revendication 1, comprenant des plaques (2, 3) disposées en empilement, dans lequel au moins deux plaques (2, 3) sont partiellement reliées l'une à l'autre au moyen d'un élément d'étanchéité (4), dans lequel au moins un autre joint (5) est disposé entre les plaques (2, 3) et dans lequel les plaques (2, 3) sont réalisées sous forme de plaques bipolaires comportant des dispositifs de refroidissement (7) intégrés, **caractérisé en ce que** l'autre joint (5) est disposé sur le côté des plaques (2, 3) sur lequel se trouvent les logements destinés aux dispositifs de refroidissement (7).

3. Module selon la revendication 2, **caractérisé en ce que** des logements (6) dans lesquels est disposé l'autre joint (5) sont disposés sur les côtés tournés l'un vers l'autre des plaques (2, 3).

4. Module selon l'une des revendications 2 à 3, **caractérisé en ce que** l'autre joint (5) se présente sous forme de pièce moulée par injection.

5. Module selon l'une des revendications 2 à 3, **caractérisé en ce que** l'autre joint (5) est réalisé sous forme d'assemblage par adhésif.

6. Module selon l'une des revendications 2 à 4, **caractérisé en ce que** l'autre joint (5) est réalisé sous forme de joint plat.

7. Module selon l'une des revendications 2 à 5, **caractérisé en ce que** l'autre joint (5) présente un profil de surface (8).

8. Module selon l'une des revendications 2 ou 3, **caractérisé en ce que** l'autre joint (5) est constitué d'un joint torique.

9. Module selon la revendication 2, **caractérisé en ce qu'**une plaque (3) présente au moins une protubérance (15) qui est disposée à proximité de l'élément d'étanchéité (4) et forme l'autre joint (5).

10. Module selon la revendication 2, **caractérisé en ce qu'**une plaque (3) présente deux protubérances (15) circonférentielles qui sont respectivement disposées à proximité de l'élément d'étanchéité (4) et forment l'autre joint (5).

11. Module selon la revendication 9 ou 10, **caractérisé en ce que** les protubérances (15) sont formées en un même matériau que la plaque (3) et d'un seul tenant avec celle-ci.

12. Module selon l'une des revendications 9 à 11, **caractérisé en ce que** la protubérance (15) est de forme triangulaire.

13. Module selon l'une des revendications 9 à 12, **caractérisé en ce que** l'autre plaque (2) présente au moins un logement (16) complémentaire de la protubérance (15) .
